# EUROPEAN PATENT APPLICATION

(11) **EP 3 708 445 A1**
(43) Date of publication of application: **16.09.2020**
(21) Application number: 18876278.5
(22) Date of filing: 07.02.2018
(51) Int. Cl.: B60S 5/06

(54) **BATTERY-CHANGING TRANSPORTATION APPARATUS AND POSITIONING CONTROL METHOD THEREFOR**

(30) Priority: 08.11.2017 CN 201711090791
(71) Applicant: NIO Nextev Limited, Central, Hong Kong (HK)
(72) Inventor: MA, Yongyue, Central Hong Kong (HK); BENGTSSON, Jan, Central Hong Kong (HK); LI, Nan, Central Hong Kong (HK); TIAN, Xiaotao, Central Hong Kong (HK); DING, Xikun, Central Hong Kong (HK)
(74) Representative: Vossius & Partner Patentanwälte Rechtsanwälte mbB
(86) International application number: PCT/CN2018/075555
(87) International publication number: WO 2019/091005

(57) **Abstract**

Provided is a battery swap transportation apparatus. The apparatus comprises one or more servo motors, a motor controller, a transportation body capable of being driven by the one or more servo motors to move in a predetermined direction, a motion controller and a position information feedback component, wherein the position information feedback component is configured to measure position information of the transportation body in the predetermined direction in real time and feed back the position information to the motion controller; and the motion controller is configured to control, in a closed loop manner, the motion of the transportation body in the predetermined direction based on the position information. The position information feedback component improves the precision of positioning control of the battery swap transportation apparatus and ensures successful battery swapping. Further provided is a method for positioning control of a battery swap transportation apparatus.

## Description

### Technical Field

The invention belongs to the technical field of traction battery replacement for vehicles, relates to a battery swap station, and in particular, to a battery swap transportation apparatus for a battery swap station and a positioning control method therefor.

### Background Art

In order to adapt to the environmental protection and cope with energy crisis, new energy vehicles (such as electric vehicles) are becoming more and more popular. A very important development trend of existing new energy vehicles is the new energy vehicles with swappable batteries, which can significantly shorten the energy supply time compared with plug-in new energy vehicles.

Corresponding battery swap stations (or known as "battery swap systems") need to be established in order to facilitate vehicle users in swapping batteries. Since manual battery swap efficiency is too low to suit industrial application in a battery swap station, in order to realize fast and highly efficient automated battery swapping, a vehicle position adjustment system needs to be provided in the battery swap station to move a vehicle needing to swap a battery to a target position suitable for swapping the battery, and then a battery swap transportation apparatus (for example, a battery swap trolley used for loading a traction battery pack) is used for automated battery swapping.

In the process of automatic battery swapping, it is necessary for the battery swap transportation apparatus to control its own positioning relatively accurately with respect to a feature hole in the chassis of the vehicle. Therefore, whether the battery swap process is successful depends largely on the precision of positioning control of the battery swap transportation apparatus.

### Summary of the Invention

The invention aims to improve the precision of positioning control of a battery swap transportation apparatus.

To realize the objectives above or other objectives, the invention provides the technical solutions as follows.

According to an aspect of the invention, there is provided a battery swap transportation apparatus comprising one or more servo motors, a motor controller, a transportation body capable of being driven by the one or more servo motors to move in a predetermined direction, and a motion controller. The battery swap transportation apparatus further comprises:
a position information feedback component configured to measure position information of the transportation body in the predetermined direction in real time and feed back the position information to the motion controller;
wherein the motion controller is configured to control, in a closed loop manner, the motion of the transportation body in the predetermined direction based on the position information.

The battery swap transportation apparatus according to an embodiment of the invention is a rail type battery swap transportation apparatus, wherein the predetermined direction is a direction where a rail is located, and the transportation body is capable of being driven by the one or more servo motors to move along the rail.

In the battery swap transportation apparatus according to an embodiment of the invention, the position information feedback component is an encoder scale comprising a ruler part which is mounted in the predetermined direction.

In the battery swap transportation apparatus according to an embodiment of the invention, the encoder scale further comprises an encoder which moves synchronously with the transportation body in the predetermined direction relative to the ruler part and is configured to read the position information.

In the battery swap transportation apparatus according to an embodiment of the invention, the motion controller is further configured to output a positioning adjustment instruction in real time based on the received position information, so that the position of the transportation body is adjusted to a predetermined position.

In the battery swap transportation apparatus according to an embodiment of the invention, the motion controller is further configured to send to the motor controller a predetermined motion speed instruction for controlling the motion of the transportation body in the predetermined direction;
the motor controller is configured to control the one or more servo motors based on the predetermined motion speed instruction and feed back current speed information of the one or more servo motors; and
the motion controller is further configured to adjust the predetermined motion speed instruction based on the speed information fed back by the motor controller.

In the battery swap transportation apparatus according to an embodiment of the invention, the motion controller is connected to the motor controller by means of a control bus.

In the battery swap transportation apparatus according to an embodiment of the invention, the control bus is provided with a shielding layer for anti-interference.

The battery swap transportation apparatus according to an embodiment of the invention further comprises a load measurement component arranged on the transportation body that is configured to measure current load information of the transportation body.

In the battery swap transportation apparatus according to an embodiment of the invention, the load measurement component is further configured to feed back the load information to the motion controller in real time; and
the motion controller is further configured to adjust operation parameters based on changes in the load information.

According to another aspect of the invention, there is provided a method for positioning control of a battery swap transportation apparatus, the battery swap transportation apparatus comprising a transportation body being capable of moving in a predetermined direction. The method comprises the steps of:
measuring position information of the transportation body in the predetermined direction in real time and feeding back the position information; and
controlling, in a closed loop manner, the motion of the transportation body in the predetermined direction based on the position information fed back.

In the method for positioning control according to an embodiment of the invention, the position information is measured by an encoder scale and is fed back.

In the method for positioning control according to an embodiment of the invention, in the step of controlling the transportation body in a closed loop manner, a positioning adjustment instruction is output in real time based on the position information, so that the position of the transportation body is adjusted to a predetermined position.

The method for positioning control according to an embodiment of the invention further comprises the steps of:
sending a predetermined motion speed instruction for controlling the motion of the transportation body in the predetermined direction;
controlling, based on the predetermined motion speed instruction, a servo motor for driving the transportation body to move in a predetermined direction;
feeding back current speed information of the servo motor; and
adjusting the predetermined motion speed instruction based on the speed information fed back.

The method for positioning control according to an embodiment of the invention further comprises the steps of:
measuring current load information of the transportation body in real time;
feeding back the load information; and
adjusting operation parameters based on changes in the load information.

According to yet another aspect of the invention, there is provided a battery swap station, which comprises any one of the battery swap transportation apparatuses described above.

### Brief Description of the Drawings

The above-mentioned and other objectives and advantages of the invention will be more thorough and clearer from the following detailed description in conjunction with the drawings, wherein the same or similar elements are represented by the same numerals.
FIG. 1 is a schematic structural view of a battery swap station according to an embodiment of the invention.
FIG. 2 is a schematic view of a partial structure of the battery swap station according to the embodiment shown in FIG. 1.
FIG. 3 is a structural view of a battery swap transportation apparatus according to an embodiment of the invention.
FIG. 4 is a schematic view of a control principle of the battery swap transportation apparatus according to the embodiment shown in FIG. 3.
FIG. 5 is a flowchart of a method for positioning control of a battery swap transportation apparatus according to an embodiment of the invention.
FIG. 6 is a flowchart of a method for positioning control of a battery swap transportation apparatus according to another embodiment of the invention.
FIG. 7 is a flowchart of a method for positioning control of a battery swap transportation apparatus according to yet another embodiment of the invention.

### Detailed Description of Embodiments

The invention will be more completely described with reference to the accompanying drawings. Exemplary embodiments of the invention are shown in the accompanying drawings. However, the invention may be implemented in many different forms and should not be construed as being limited to the embodiments set forth herein. On the contrary, these embodiments are provided to make the disclosure thorough and complete and fully pass on the concept of the invention to those skilled in the art. In the drawings, the same numerals indicate the same elements or components, and thus description of these is omitted.

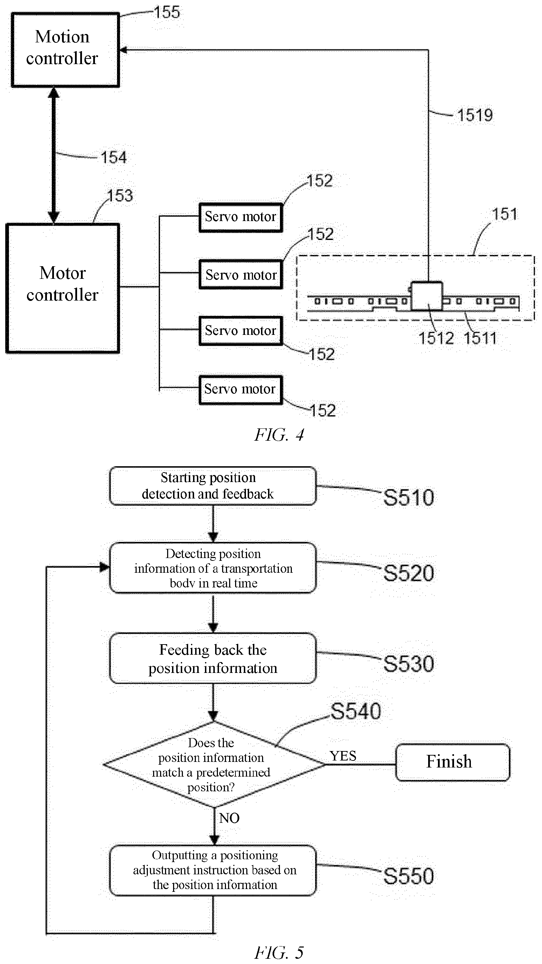

It shall be understood that some block diagrams shown in FIG. 4 are functional entities and do not necessarily correspond to physically or logically independent entities. These functional entities may be implemented as software, one or more hardware modules or integrated circuits, or different networks and/or processor apparatuses and/or micro-controller apparatuses.

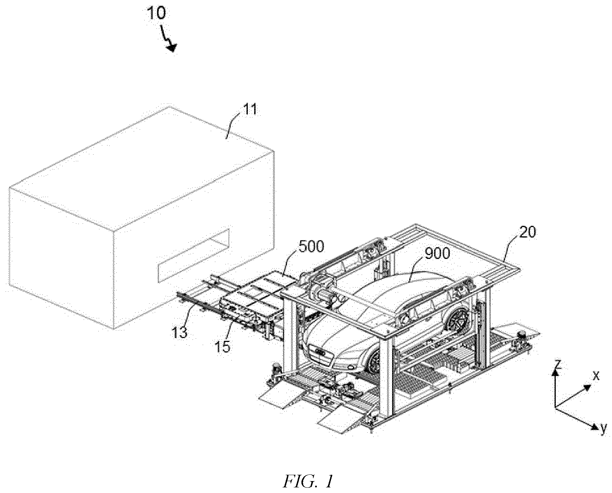

As shown in FIGs. 1 to 3, the battery swap transportation apparatus according to embodiments of the invention is applied to the battery swap station to construct a battery swap station 10 shown in FIG. 1. The battery swap station 10 mainly comprises a battery compartment 11, a vehicle lifting apparatus 20, a rail 13 arranged between the battery compartment 11 and the vehicle lifting apparatus 20, and a battery swap transportation apparatus 15 traveling on the rail 13. Herein, for convenience of description, a y direction is defined as the direction where the rail 13 is located, a z direction is defined as a height direction, and an x direction is defined as a direction perpendicular to the y direction in the horizontal plane.

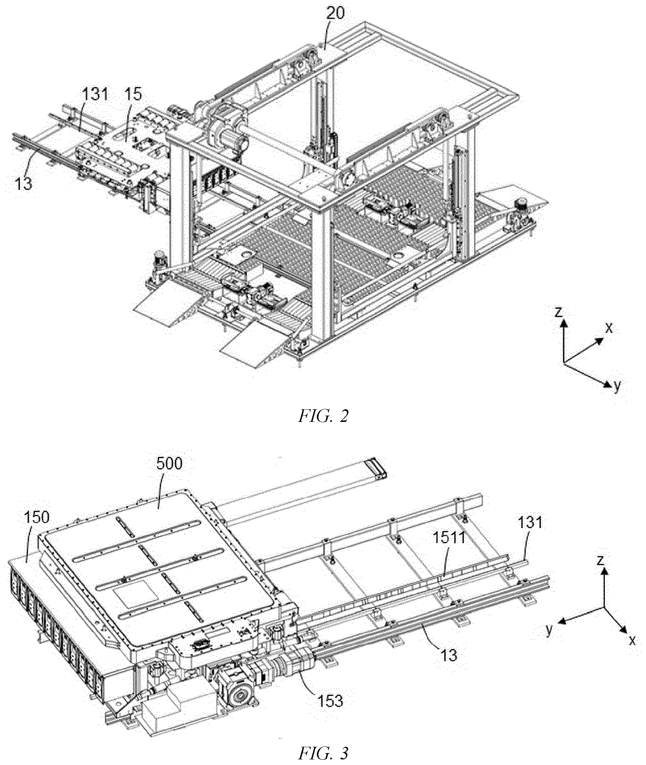

A vehicle 900 is a pure electric vehicle or a hybrid vehicle that uses a traction battery to at least partially provide drive. The traction battery of the vehicle is mounted, for example, at the approximate chassis position of the vehicle, so that if a battery swap operation is performed, in one embodiment, a vehicle lifting apparatus 20 shown in FIGs. 1 and 2 is first required to lift the vehicle in the z direction. Certainly, the vehicle lifting apparatus 20 can also lower the vehicle. The specific structure, type and/or control principle of the vehicle lifting apparatus 20 are not limited by the embodiments of the invention.

After the vehicle lifting apparatus 20 lifts the vehicle 900 to a predetermined height, the battery swap transportation apparatus 15 enters under the vehicle 900 of the vehicle lifting apparatus 20 with no load, removes from the chassis of the vehicle a relatively drained battery pack 500 to be replaced, transfers the drained battery pack 500 from the vehicle lifting apparatus 20 to the battery compartment 11, and then carries a fully-charged battery pack 500 with a relatively sufficient power quantity from the battery compartment 11 to under the vehicle 900, and automatic mounting is performed after the battery pack 500 is aligned with the corresponding mounting position (e.g., feature hole) of the vehicle 900. The above work flow is automated and is applicable to miniaturized battery swap stations, and the battery swap stations can be extended modularly.

As shown in FIGs. 3 and 4, the battery swap transportation apparatus 15 mainly comprises a transportation body 150 and a servo motor 152 (e.g., arranged inside the transportation body 150). The battery swap transportation apparatus 15 can specifically be an automated battery swap rail trolley, namely a rolling guide vehicle (RGV) trolley, which is a rail type battery swap transportation apparatus, and the transportation body 150 can be driven by the servo motor 152 to move along the rail 13. For example, the battery pack 150 can be loaded in a positioned manner on the transportation body 150 and is driven by the servo motor 152, and the transportation body 150 can move back and forth in the y direction where the rail 13 is located. In view of the need to align with the feature hole of the vehicle 900, the motion of the transportation body 150 in the y direction requires precise positioning control. For example, an inherent error caused by mechanical mechanism clearance and an assembly error caused by mechanism assembly need to be overcome.

In one embodiment, a rack 131 is arranged parallel to the rail 13, and a transmission mechanism of the battery swap transportation apparatus 15 is provided with a gear meshed with the rack 131. Under the drive of the servo motor 152, the gear moves along the rack 131 in the y direction.

In one embodiment, the transportation body 150 can be a floating elevating apparatus to realize its motion in the z direction. For example, the transportation body 150 can be provided with: an elevatable support apparatus, a conveying apparatus for exchanging battery packs (the conveying apparatus has a first surface in contact with the battery packs), and a floating apparatus. The floating apparatus has a second surface provided with a battery locking/unlocking apparatus, the floating apparatus is mounted in a suspended manner on the support apparatus and can float at least horizontally relative to the support apparatus, and the floating apparatus also has a space for elevating relative to the conveying apparatus, such that: when the conveying apparatus is in contact with the battery pack, the first surface is higher than the second surface, and when the floating apparatus locks/unlocks the battery, the second surface is higher than the first surface. It should be understood that the specific internal structure of the transportation body 150 is not restrictive.

Continuing with what is shown in FIGs. 3 and 4, the battery swap transportation apparatus 15 further comprises an encoder scale 151 serving as a position information feedback component. The encoder scale 151 comprises an encoder 1512 and a ruler part 151 (e.g., a linear ruler part) mounted parallel to the rail 13, wherein the encoder 1512 moves synchronously with the transportation body 150 in the y direction relative to the ruler part 1511. In this way, during the motion of the transportation body 150 in the y direction, the encoder 1512 can detect the displacement amount of the transportation body 150 relative to the fixed ruler part 1511 in real time, that is, position information 1519 of the transportation body 150 in the y direction is read out in real time. In addition, the position information 1519 is sent, in the form of a feedback signal, to the motion controller 155 of the battery swap transportation apparatus 15 shown in FIG. 4. It should be understood that the position information 1519 can truly reflect the real position of the transportation body 150 in the y direction.

Continuing with what is shown in FIG. 4, in a control component of the battery swap transportation apparatus 15, the motion controller 155 is coupled to a motor controller 153 of the servo motor 152, wherein the motor controller 153 can receive various control instructions from the motion controller and generate signals (e.g., pulses) based on the control instructions to control the servo motor 152 to perform servo actions. The specific number and type of servo motors 152 are not restrictive, and can be selected and set according to specific power requirements, etc. The motor controller 153 can be specifically but is not limited to a servo controller.

In one embodiment, as shown in FIG. 4, the motion controller 155 is connected to the motor controller 153 by means of a control bus 154, so as to reduce external interference to transmitted control instructions or signals. The control bus 154 can be specifically provided with a shielding layer for anti-interference, thus being conducive to the fidelity of the transmitted control instructions or signals and improving the precision of positioning control.

As shown in FIG. 4, a closed-loop control is formed among the motion controller 155, the motor controller 153, the servo motor 152, and the encoder scale 151. The motion controller 155 is configured to control, in a closed loop manner, the motion of the transportation body 150 in the y direction based on, for example, the position information 1519 fed back by the encoder scale 151, thereby realizing accurate positioning control of the transportation body 150. In one embodiment, the motion controller 155 is further configured to output a positioning adjustment instruction in real time based on the received position information 1519, so that the position of the transportation body 150 is adjusted to a predetermined position, thereby achieving accurate traveling or positioning of the transportation body 150 on the rail 13.

In one embodiment, as shown in FIG. 4, the motor controller 153 can acquire current speed information of the servo motor 152 while controlling the action of the servo motor 152. The motion controller 155 sends to the motor controller 153 a predetermined motion speed instruction for controlling the motion of the transportation body 150 in the y direction, and the motor controller 153 can control the action of, for example, one or more servo motors 152 based on the predetermined motion speed instruction and feed back the current speed information of the servo motors 152 with the action; and the motion controller 155 can further adjust the predetermined motion speed instruction based on the speed information fed back by the motor controller 153. In this way, the closed-loop control of a speed loop can be realized, which is also conducive to real-time feedback adjustment of the speed of the transportation body 150, thus improving the traveling precision of the transportation body 150.

In one embodiment, the battery swap transportation apparatus 15 further comprises a load measurement component (not shown in the figure) arranged on the transportation body 150, and the load measurement component is configured to measure current load information of the transportation body 150. It should be understood that when the battery pack is loaded and unloaded, the load information will change and be sensed by the load measurement component in real time. For different battery packs being carried, the load information of the transportation body 150 is also different.

The load measurement component is also configured to feed back the load information to the motion controller 155 shown in FIG. 4 in real time, and the motion controller 155 can further adjust operation parameters such as positioning control speed, servo position data and position gain in real time based on changes in the load information 155. In one embodiment, the motion controller 155 can further adjust the operation parameters in real time according to whether the transportation body 150 or the battery pack 500 is in contact with the chassis of the vehicle 900. The introduction of the load measurement component is conducive to more stable motion of the transportation body 150 (especially in the z direction) and is anti-interference.

The battery swap transportation apparatus 15 in the embodiments shown above can realize double closed-loop control of a position loop and a speed loop, and dynamically adjust the servo position in real time. Therefore, the positioning of the transportation body 150 and the battery pack 500 (if loaded) thereon can be more accurate, for example, up to the precision of 0.01 mm, which is conducive to the quick and successful replacement of the battery pack. Moreover, a motion control system can adjust dynamic parameters according to the current load information to realize automatic parameter setting, such that the motion is more stable and the interference is less.

It should also be noted that the improvement of the positioning precision of the battery swap transportation apparatus 15 according to the embodiment of the invention is realized not depending on the clearance, the assembly precision and the like of the mechanical mechanism, and therefore, it has a relative low cost and is easy to implement.

A method for positioning control of a battery swap transportation apparatus according to an embodiment of the invention is described below with reference to FIGs. 3, 4 and 5 to 7.

FIG. 5 shows a flowchart of a method for positioning control of a battery swap transportation apparatus according to an embodiment of the invention. The method for positioning control is illustrated based on the closed-loop control process of a position loop.

First, in step S510, position detection and feedback are started. After motion control of the transportation body 150 is begin, position information 1519 of the transportation body is detected in real time, i.e., step S520. The position information is detected by an encoder scale 151, and the position information 1519 itself has a high accuracy.

Further, in step S530, the position information 1519 is fed back. Specifically, the encoder scale 151 feeds back the detected position information 1519 to the motion controller 155 in real time, and the motion controller 155 can thus know the actual position information of the transportation body 150 in the y direction.

Since there may be an error between the actual position and the predetermined position known by the motion controller 155 (for example, the error is due to the insufficient precision of mechanism motion), the process proceeds to step S540 to determine whether the position information 1519 matches the predetermined position. If it is matched (it is determined to be YES), it indicates that the current traveling precision of the transportation body 150 meets the requirement, and the positioning control at this time or during this stage is finished; if it is not matched (it is determined to be NO), it indicates that the current traveling precision of the transportation body 150 does not meet the requirement, and repositioning adjustment is required. The process proceeds to step S550: outputting a positioning adjustment instruction based on the position information 1519, wherein the positioning adjustment instruction can still used to drive the servo motor 152 to perform a corresponding servo action until it is determined to be YES in step S540.

It should be understood that steps S520 and S530 above may be completed on the encoder scale 151, and steps S540 to S550 above may be implemented in the motion controller 155.

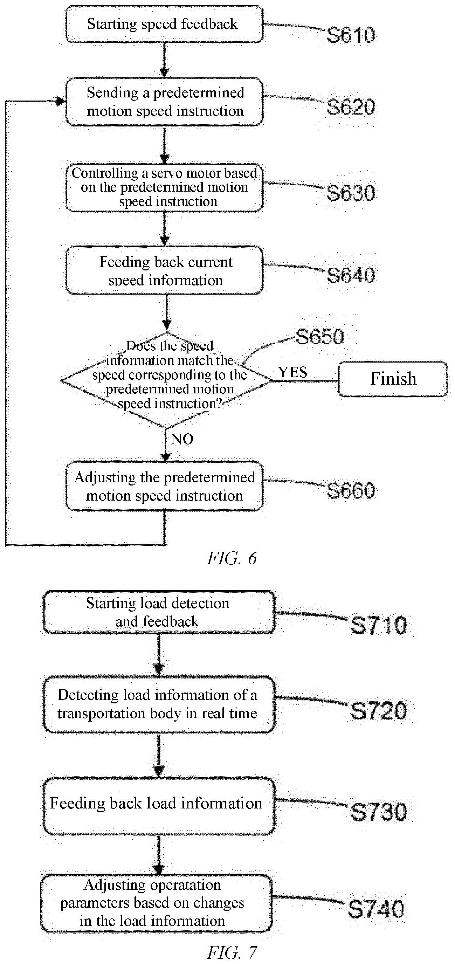

FIG. 6 shows a flowchart of a method for positioning control of a battery swap transportation apparatus according to another embodiment of the invention. The method for positioning control is illustrated based on the closed-loop control process of a speed loop.

First, in step S610, speed feedback is started.

In step S620, a predetermined motion speed instruction is sent. For example, the motion controller 155 generates a corresponding predetermined motion speed instruction and sends it to the motor controller 153. It should be understood that the speed corresponding to the predetermined motion speed instruction is the desired speed.

In step S630, the servo motor 152 is controlled based on the predetermined motion speed instruction, for example, the servo motor 152 is controlled to perform corresponding servo actions. Meanwhile, the speed information of the servo motor 152 when performing the corresponding servo action can be acquired by the motor controller 153, and the speed information basically reflects the speed information of the transportation body 150 in the y direction, for example.

In step S640, the speed information is fed back. That is, the motor controller 153 may feed back the acquired speed information to the motion controller 155 in real time.

In step S650, it is determined whether the speed information matches the speed corresponding to the predetermined motion speed instruction. If it is matched (it is determined to be YES), it indicates that the current motion speed precision of the transportation body 150 meets the requirement, and the closed-loop control of the speed at this time or during this stage is finished; if it is not matched (it is determined to be NO), it indicates that the current motion speed of the transportation body 150 does not meet the requirement and readjustment is required. The process proceeds to step S660, and the predetermined motion speed instruction is adjusted based on the speed information fed back until it is determined to be YES in step S650.

It should be understood that steps S630 and S640 above can be completed in the motor controller 153, and steps S610, S650 and S660 above can be implemented in the motion controller 155.

FIG. 7 shows a flowchart of a method for positioning control of a battery swap transportation apparatus according to yet another embodiment of the invention.

In step S710, load detection and feedback are started. After motion control of the transportation body 150 is begin, load information of the transportation body is detected in real time, i.e., step S720. The load information is detected or measured by a load measurement component.

In step S730, load information is fed back. Specifically, the encoder scale 151 feeds back the detected load information to the motion controller 155 in real time, and the motion controller 155 can thus know the current load of the transportation body 150.

In step S740, operation parameters are adjusted based on changes in the load information. In this step, the motion controller 155 can further adjust the operation parameters in real time according to whether the transportation body 150 or the battery pack 500 is in contact with the chassis of the vehicle 900 (i.e. contact information). That is, the operation parameters can be adjusted by combining the load information with the contact information to realize the setting of servo parameters.

It should be noted that the method for positioning control according to the embodiments shown in FIGs. 5, 6 and 7 above can be performed separately or simultaneously in any combination.

It should be noted that the motion controller 155 of the above embodiments can be implemented by a programmable logic controller (PLC) or the like, or can be implemented by a processor or the like that can execute corresponding program instructions.

The battery swap transportation apparatus implemented according to the invention can realize at least closed-loop control of the position, has high positioning precision, is very suitable for the battery swap operation process, and is conducive to improve the battery swap experience; and the implementation cost is low.

The above examples mainly illustrate the battery swap transportation apparatus, the method for positioning control thereof, and the battery swap station using the battery swap transportation apparatus according to the invention. Although only some implementation manners of the invention are described, a person of ordinary skill in the art should understand that the invention may be implemented in multiple other forms without departing from the theme and scope of the invention. Therefore, the presented examples and implementation manners are regarded to be schematic rather than limitative, and without departing from the spirit and scope of the invention that are defined by the appended claims, the invention may cover various changes and replacements.

## Claims

1. A battery swap transportation apparatus comprising one or more servo motors, a motor controller, a transportation body capable of being driven by the one or more servo motors to move in a predetermined direction, and a motion controller, **characterized in that** the battery swap transportation apparatus further comprises:
a position information feedback component configured to measure position information of the transportation body in the predetermined direction in real time and feed back the position information to the motion controller;
wherein the motion controller is configured to control, in a closed loop manner, the motion of the transportation body in the predetermined direction based on the position information.

2. The battery swap transportation apparatus according to claim 1, **characterized in that** the battery swap transportation apparatus is a rail type battery swap transportation apparatus, wherein the predetermined direction is a direction where a rail is located, and the transportation body is capable of being driven by the one or more servo motors to move along the rail.

3. The battery swap transportation apparatus according to claim 1 or 2, **characterized in that** the position information feedback component is an encoder scale comprising a ruler part which is mounted in the predetermined direction.

4. The battery swap transportation apparatus according to claim 3, **characterized in that** the encoder scale further comprises an encoder which moves synchronously with the transportation body in the predetermined direction relative to the ruler part and is configured to read the position information.

5. The battery swap transportation apparatus according to claim 1, **characterized in that** the motion controller is further configured to output a positioning adjustment instruction in real time based on the received position information, so that the position of the transportation body is adjusted to a predetermined position.

6. The battery swap transportation apparatus according to claim 1, **characterized in that** the motion controller is further configured to send to the motor controller a predetermined motion speed instruction for controlling the motion of the transportation body in the predetermined direction;
the motor controller is configured to control the one or more servo motors based on the predetermined motion speed instruction and feed back current speed information of the one or more servo motors; and
the motion controller is further configured to adjust the predetermined motion speed instruction based on the speed information fed back by the motor controller.

7. The battery swap transportation apparatus according to claim 1, **characterized in that** the motion controller is connected to the motor controller by means of a control bus.

8. The battery swap transportation apparatus according to claim 7, **characterized in that** the control bus is provided with a shielding layer for anti- interference.

9. The battery swap transportation apparatus according to claim 1, **characterized by** further comprising a load measurement component arranged on the transportation body that is configured to measure current load information of the transportation body.

10. The battery swap transportation apparatus according to claim 9, **characterized in that** the load measurement component is further configured to feed back the load information to the motion controller in real time; and
the motion controller is further configured to adjust operation parameters based on changes in the load information.

11. A method for positioning control of a battery swap transportation apparatus, the battery swap transportation apparatus comprising a transportation body being capable of moving in a predetermined direction, **characterized in that** the method comprises the steps of:
measuring position information of the transportation body in the predetermined direction in real time and feeding back the position information; and
controlling, in a closed loop manner, the motion of the transportation body in the predetermined direction based on the position information fed back.

12. The method for positioning control according to claim 11, **characterized in that** the position information is measured by an encoder scale and is fed back.

13. The method for positioning control according to claim 11, **characterized in that** in the step of controlling the transportation body in a closed loop manner, a positioning adjustment instruction is output in real time based on the position information, so that the position of the transportation body is adjusted to a predetermined position.

14. The method for positioning control according to claim 11, **characterized by** further comprising the steps of:
sending a predetermined motion speed instruction for controlling the motion of the transportation body in the predetermined direction;
controlling, based on the predetermined motion speed instruction, a servo motor for driving the transportation body to move in a predetermined direction;
feeding back current speed information of the servo motor; and
adjusting the predetermined motion speed instruction based on the speed information fed back.

15. The method for positioning control according to claim 11, **characterized by** further comprising the steps of:
measuring current load information of the transportation body in real time;
feeding back the load information; and
adjusting operation parameters based on changes in the load information.

16. A battery swap station, **characterized by** comprising a battery swap transportation apparatus according to any one of claims 1 to 10.
